# EUROPEAN PATENT SPECIFICATION

(11) **EP 1 548 317 B1**
(45) Date of publication and mention of the grant of the patent: **20.02.2008**
(21) Application number: 04028874.8
(22) Date of filing: 06.12.2004
(51) Int. Cl.: F16D 65/12

(54) **Disk brake rotor assembly**
Bremsscheibenanordnung.
Ensemble de rotor de frein à disque.

(30) Priority: 26.12.2003 JP 2003433962
(43) Date of publication of application: 29.06.2005
(73) Proprietor: SHIMANO INC., Osaka 590-8577 (JP)
(72) Inventor: Takizawa, Shinichi, Izumisano Osaka (JP)
(74) Representative: GROSSE BOCKHORNI SCHUMACHER

(56) References cited:
- EP-A- 1 288 117
- US-A- 1 527 915
- US-A1- 2004 182 654

## Description

### Technical Field

The invention relates to a disc brake rotor assembly mounted on a bicycle.

### Background Art

Cycling has gained widespread acceptance not only as a means of transportation but as a form of recreation as well. Moreover, bicycle racing, in both amateur and professional fields, is an extremely popular racing sport. The bicycle industry has made ceaseless improvements to a variety of bicycle parts, whether they be for bicycles for recreation, transportation, or racing. Bicycle braking systems in particular have undergone wide-ranging redesign over the past few years.

Several types of bicycle braking devices are available on the market. There are, for example, rim brakes, caliper brakes, disc brakes, and other general bicycle braking devices. When the rider requires a very high-performance braking system, a disc brake system is normally necessary. Disc brake systems confer a very large amount of control relative to the force of operation applied to the brake lever. Disc brake systems, moreover, generally have a high robustness under any weather or riding condition.

Bicycle brake disc assemblies used in disc brake systems normally comprise a caliper connected to a brake lever attached to a bicycle frame and a disc brake rotor securely connected to a hub of a bicycle wheel. Several different methods are used for connecting the disc brake rotor to the wheel hub.

There is, for example, a method in which an adapter and disc brake rotor are attached in that order and then a lock ring is screwed onto a hub in order to secure the disc brake rotor assembly to the hub. In this method, the lock ring can rotate relative to the hub through long years of use, vibration, or the like, possibly resulting in the disc brake rotor assembly loosening, even when the lock ring is tightly screwed onto the inner screw formed on the hub.

EP-A-1 288 117 shows a bicycle disc brake hub with a disc brake rotor attachment portion. The disc brake rotor is fixed to the hub by a lock ring. Serrations are formed on the side of the lock ring in contact with the brake rotor.

This prior art disc brake rotor assembly has the following problems: The bicycle disc brake rotor assembly disclosed in the above publication derives a certain anti-loosening effect due to the serrations formed on the lock ring side, but the contacted surface of the neighboring disc brake rotor is nearly flat, so that the anti-loosening effect cannot be termed adequate.

An object of the invention is to provide a disc brake rotor assembly capable of assuredly preventing loosening of the lock ring due to rotation caused by long years of use, vibration, and the like.

The disc brake rotor assembly according to the invention, is defined in claim 1.

Here, serrations or another rotation-inhibiting part is formed on the surface of the disc brake rotor grouping making contact with the securing member in order to prevent the securing member screwed onto the thread formed on one end of the bicycle hub from gradually rotating and becoming unscrewed during use when the disc brake rotor grouping is connected to the bicycle hub.

The rotation-inhibiting part thus serves to resist rotation of the securing member screwed onto the bicycle hub in the direction of loosening and more assuredly prevents the securing member from rotating relative to the bicycle hub and becoming unscrewed due to long years of use, vibration, or the like.

Further advantages of the invention are defined by the features of the dependent claims.

### Effects of the invention:

According to the invention, the securing member is assuredly prevented from rotating relative to the bicycle hub and becoming unscrewed due to long years of use, vibration, or the like.

### Brief description of the drawings

- FIG. 1: A side view of a bicycle mounted with the front and rear disc brake hubs of the first embodiment of the invention.
- FIG. 2: A simplified view of the front disc brake assembly connected to the front fork and the front disc brake controlling mechanism of the bicycle of FIG. 1.
- FIG. 3: A simplified view of the rear disc brake assembly connected to the rear fork and the rear disc brake controlling mechanism of the bicycle of FIG. 1.
- FIG. 4: A perspective view illustrating the configuration of the disc brake rotor assembly and the bicycle hub of the embodiment.
- FIG. 5: The front disc brake hub to which the disc brake rotor assembly of FIG. 4 is attached.
- FIG. 6: The disc brake rotor included in the disc brake rotor assembly of FIG. 4.
- FIG. 7: The rotor attachment boss included in the disc brake rotor assembly of FIG. 4.
- FIG. 8: The securing ring included in the disc brake rotor assembly of FIG. 4.
- FIG. 9: A cross-sectional view illustrating the disc brake rotor assembly connected to the front disc brake hub.
- FIG. 10 A: perspective view illustrating the disc brake rotor assembly and bicycle hub of another embodiment of the invention.
- FIG. 11: A perspective view illustrating another example of the disc brake rotor.
- FIG. 12: A perspective view illustrating the rear surface of the disc brake rotor of FIG. 11.

### Preferred embodiments of the invention

### First embodiment

### Overall configuration of the bicycle

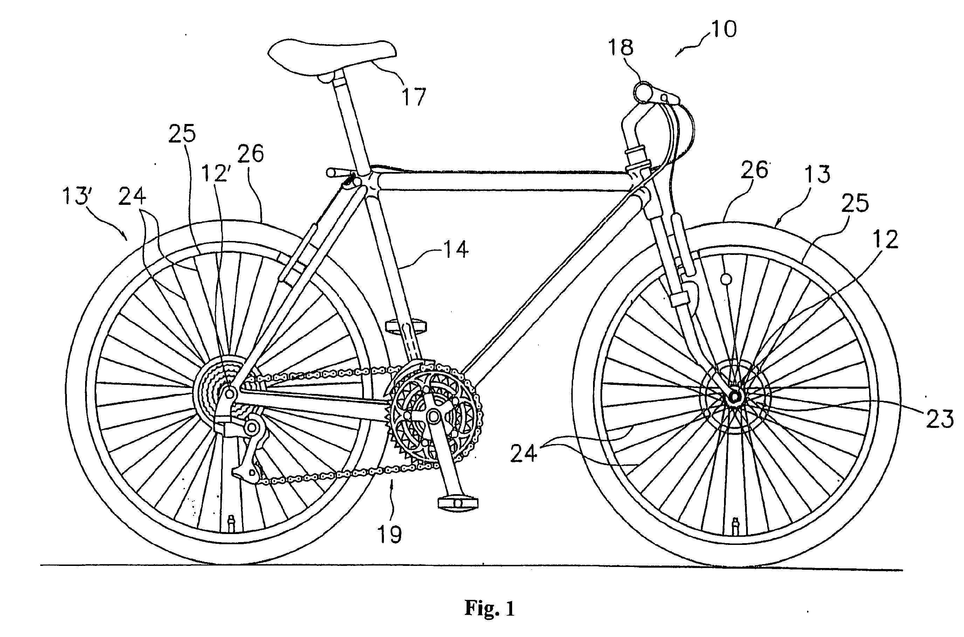

A bicycle 10 comprising the disc brake rotor assembly of the first embodiment of the invention is discussed hereafter with FIGS. 1 to 9.

The bicycle 10 of this embodiment, as shown in FIGS. 1 to 3, comprises front and rear disc brake hubs (bicycle hubs) 12 and 12'.

With regard to the front disc brake hub 12, a front wheel 13 is rotatably connected to a front fork of a frame 14. With regard to the rear disc brake hub 12', a rear wheel 13' is rotatably connected to the rear portion of the frame 14. The frame 14 comprises a seat 17 adjustably connected thereto, a handlebars 18 for rotating the front wheel 13 that is connected to the front fork, and a drive train 19 for propelling the bicycle 10.

The bicycle 10 and its various parts are known from the prior art, so a detailed description of everything except the parts around the front and rear disc brake hubs 12, 12' of the invention is not provided. Brakes, derailers, additional sprockets, and other various conventional bicycle parts not described herein may be used with the invention.

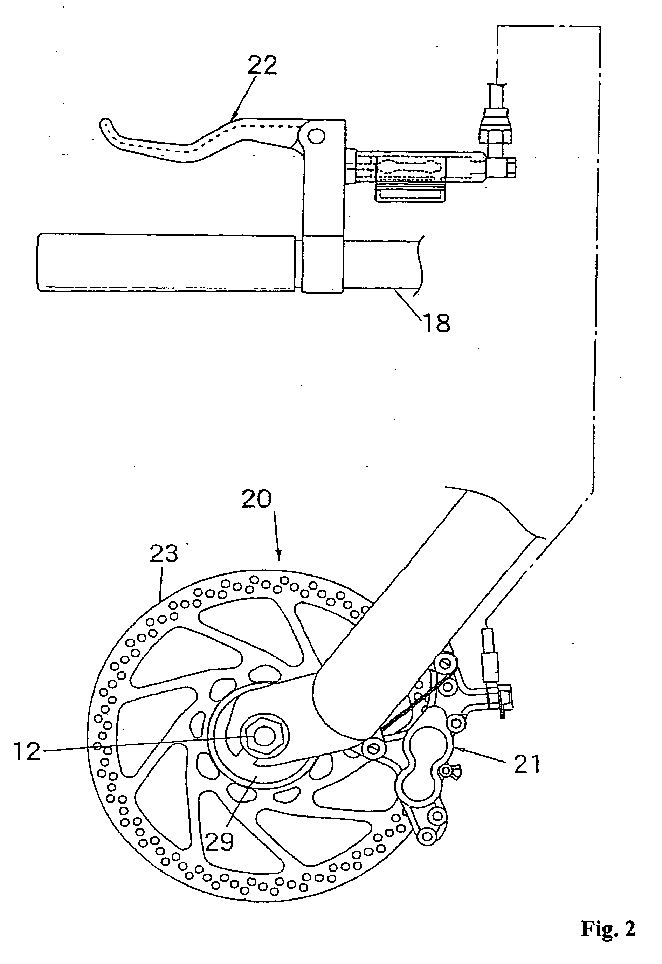

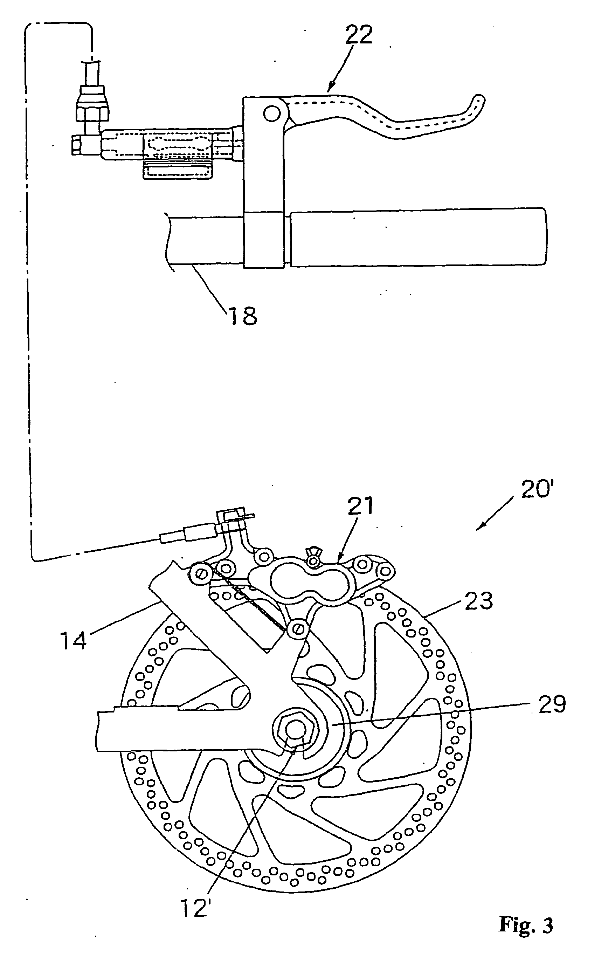

The bicycle 10, as shown in FIGS. 2 and 3, further comprises front and rear disc brake assemblies 20, 20'. The front disc brake assembly 20 and the rear disc brake assembly 20' are identical with the exception of the front and rear disc brake hubs 12, 12'. In greater detail, the front disc brake assembly 20 and the rear disc brake assembly 20' employ many identical parts. The front disc brake assembly 20 and the rear disc brake assembly 20' each comprise a caliper 21 connected to a brake lever 22 and a disc brake rotor 23. In the case of the front disc brake assembly 20, the disc brake rotor 23 is connected in a stationary manner to the front disc brake hub 12 of the front wheel 13. Similarly, in the case of the rear disc brake assembly 20', the disc brake rotor 23 is connected in a stationary manner to the rear disc brake hub 12' of the rear wheel 13'.

As FIG. 1 shows, a plurality of spokes 24 extends outward from the front and rear disc brake hubs 12, 12' of the front and rear wheels 13, 13'. The outer ends of the spokes 24 are connected in a stationary manner to a rim 25 with spoke nipples (not shown). A tire 26 is placed on the outer circumference of each rim 25 in the conventional manner.

The disc brake rotor 23 is detachably connected to the front and rear disc brake hubs 12, 12' with a rotor attachment boss (adapter) 28 and a securing ring (securing member) 29 to be discussed later. The rotor attachment boss 28 secures the disc brake rotor 23 without rivets or bolts in cooperation with the front and rear disc brake hubs 12, 12'.

### Disc brake rotor assembly

The bicycle 10 of the present embodiment comprises a disc brake rotor assembly 8 attached non-rotatably to the front disc brake hub 12.

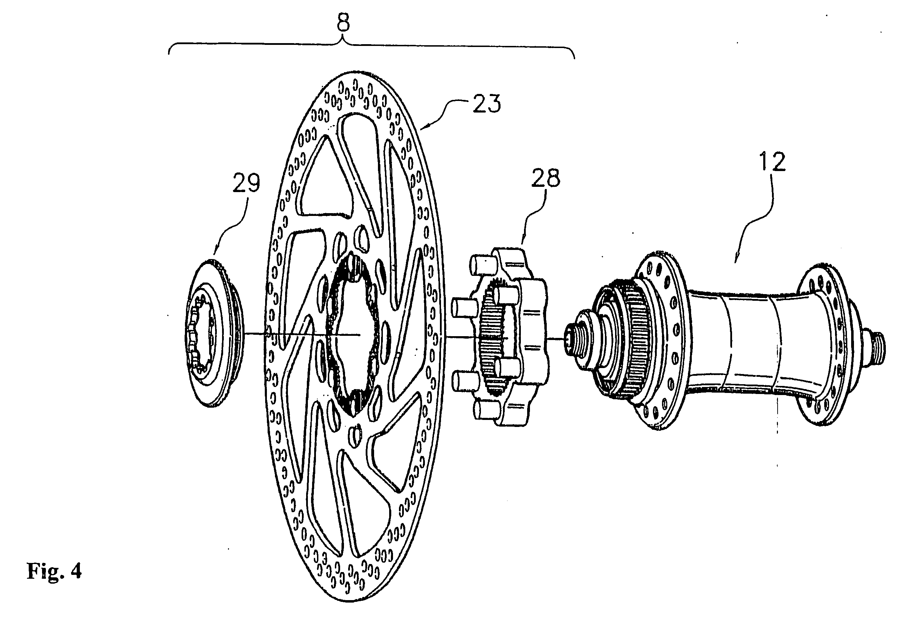

The disc brake rotor assembly 8, as shown in FIG. 4, comprises the disc brake rotor 23, the rotor attachment boss 28, and the securing ring 29.

The disc brake rotor 23 is attached non-rotatably to the front disc brake hub 12 via the rotor attachment boss 28.

The rotor attachment boss 28 supplements the connection so that the disc brake rotor 23 and the front disc brake hub 12 are held in a non-rotatable manner relative to each other.

The securing ring 29 is screwed on an inner screw 34d formed on one end of the front disc brake hub 12, securing the disc brake rotor 23 and the rotor attachment boss 28 against the front disc brake hub 12.

Hereafter, a detailed description is provided of the components the disc brake rotor assembly 8 comprises.

### Front disc brake hub

The front disc brake hub 12 is nearly identical to the rear disc brake hub 12' except that it lacks a freewheel.

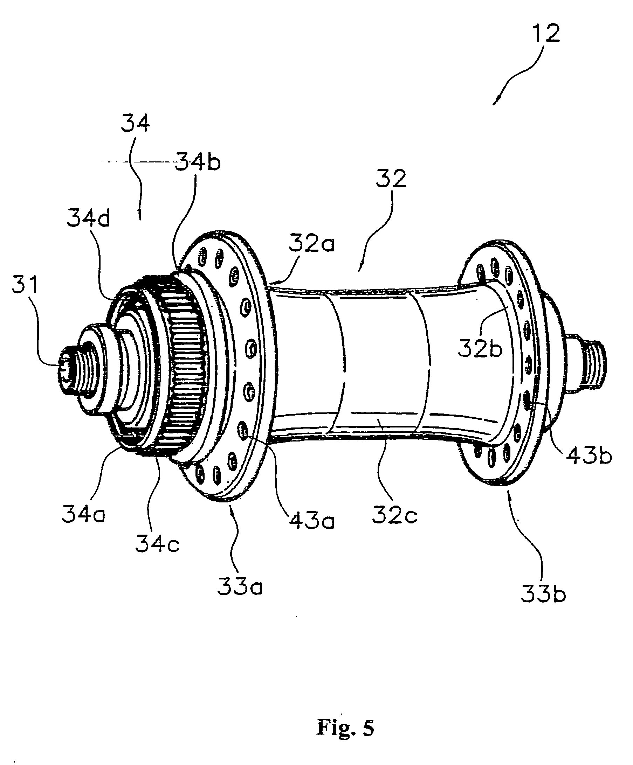

The front disc brake hub 12, as shown in FIG. 5, comprises a hub axle 31, a hub shell 32, a first spoke connector 33a, a second spoke connector 33b, and a brake rotor attachment part 34. A discussion of the conventional parts of the bicycle disc brake hub 12 is omitted.

The hub axle 31 rotatably supports the hub shell 32.
The hub shell 32, which comprises an inner pathway extending between a first hub shell end 32a and a second hub shell end 32b, is rotatably supported by the hub axle 31 on the interior of the inner pathway. The first and second spoke connectors 33a, 33b and the brake rotor attachment part 34 are formed as a unified part with the hub shell 32. Specifically, the first spoke connector 33a and the brake rotor attachment part 34 are attached in a unitary manner to the first hub shell end 32a, and the second spoke connector 33b is connected in a unitary manner to the second shell end 32b.

The first spoke connector 33a is an annular spoke flange located on the first hub shell end 32a of the hub shell 32. The first spoke connector 33a comprises a plurality of first spoke holes 43a. The first spoke holes 43a according to this embodiment are positioned in a circumferentially equidistant manner and are provided so as to receive the curved ends of the spokes 24. (See FIG. 1.) Similarly, the second hub shell end 32b of the hub shell 32 comprises a plurality of second spoke holes 43b for receiving the curved ends of the spokes 24. The second spoke holes 43b of this embodiment are positioned in a circumferentially equidistant manner. The spoke holes 43b are provided so as to receive the curved ends of the spokes 24. The front disc brake hub 12 is thus designed so that the spokes extend circumferentially outward.

The brake rotor attachment part 34 is formed as a unitary member with the first hub shell end 32a of the hub shell 32. The brake rotor attachment part 34 adjoins the first spoke connector 33a toward the first hub shell end 32a. The brake rotor attachment part 34 is a tubular member comprising a tubular part 34a and an annular adjoining flange 34b extending circumferentially outward from the tubular part 34a.

The annular adjoining flange 34b is positioned apart from the free end of the tubular part 34a. The tubular part 34a comprises an outer circumference with an outer spline portion 34c and an annular inner circumference with an inner thread 34d.

The outer spline portion 34c, which comprises a plurality of outer splines extending axially, is non-rotatably latched to the rotor attachment boss 28.

An outer thread 29e of a securing ring 29 to be discussed later is screwed onto the inner screw 34d. Thereby, the disc brake rotor 23 is secured non-rotatably to the brake rotor attachment part 34 between the rotor attachment boss 28 and the securing ring 29.

### Disc brake rotor

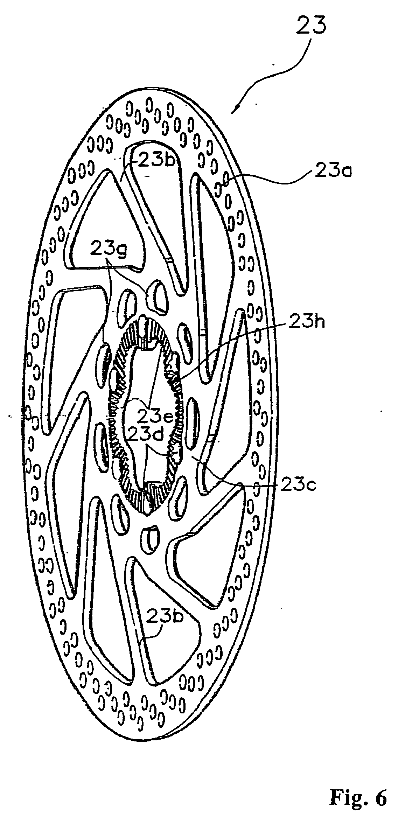

The disc brake rotor (disc brake rotor grouping) 23, as shown in FIG. 6, comprises an annular movement-control ring 23a, a plurality (8) of extending connection arms 23b formed in a unitary manner with the movement-control ring 23a, and an inner attachment part 23c formed in a unitary manner with the extending connection arms 23b. In other words, the disc brake rotor 23 is a single unitary member. The disc brake rotor 23 is preferably constituted with a material having an appropriate hardness.

The annular movement-control ring 23a is formed with a plurality of holes. The annular movement-control ring 23a forms the outer movement-control portion of the disc brake rotor 23. The outer ends of the extending connection arms 23b are positioned equidistantly around the inner blade of the annular movement-control ring 23a.

The extending connection arms 23b form an intermediate connector of the disc brake rotor 23 that extends between the annular movement-control ring 23a and the inner attachment part 23c. The extending connection arms 23b extend tangentially from the inner attachment part 23c. The extending connection arms 23b form a triangular opening with respect to each other.

The inner attachment part 23c comprises a plurality (6) of connection holes 23d opening axially, a plurality (6) of connection notches 23e, and a plurality (6) of openings 23g. Moreover, the inner attachment part 23c has formed at the location of contact with the serrations (rotation-inhibiting part) formed on the securing ring 29 similar serrations (rotation-inhibiting part) on the side of contact with the securing ring 29.

The connection holes 23d and the connection notches 23e are positioned in a circumferentially equidistant manner in the inner attachment part 23c.

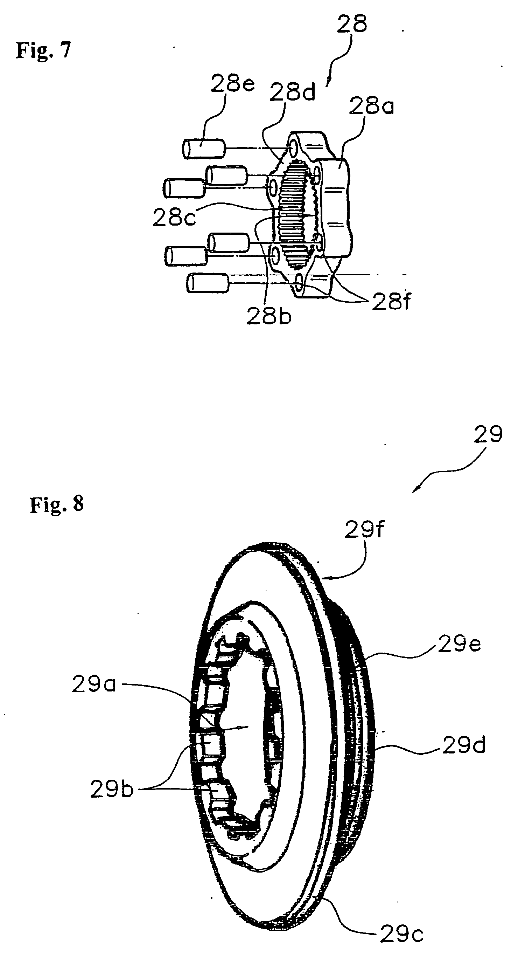

Protrusions 28e (FIG. 7) formed in the rotor attachment boss 28, to be discussed later, are inserted in the openings 23g when the disc brake rotor 23 is attached to the rotor attachment boss 28. The disc brake rotor 23 can thereby be non-rotatably connected to the rotor attachment boss 28.

### Rotor attachment boss

The rotor attachment boss (adapter; disc brake rotor grouping) 28, as shown in FIG. 7, comprises a base portion 28a with a center opening 28b, and the center opening 28b comprises a plurality of inner splines 28c that mesh with the outer spline portion 34c (FIG. 5) formed on the brake rotor attachment part 34 of the front disc brake hub 12. Relative rotation is thereby prevented between the rotor attachment boss 28 and the brake rotor attachment part 34 of the front disc brake hub 12.

The rotor attachment boss 28 further comprises an outer rotor connector 28d that extends from the base portion 28a. The base portion 28a comprises at least one axially extending protrusion 28e (an preferably comprises 6 protrusions 28e extending axially). The axially extending protrusion 28e meshes with the openings 23g formed in the disc brake rotor 23, preventing relative rotation around the axle of the rotor attachment boss 28 and the disc brake rotor 23. The protrusion 28e, as shown in FIG. 7, is formed separately from the base portion 28a and is press fit into holes 28f formed in the surface of the outer rotor connector 28d of the base portion 28a. The length of the protrusion 28e in the axial direction is preferably equal to or less than the thickness in the axial direction of the inner attachment part 23c of the disc brake rotor 23.

The rotor attachment boss 28 is preferably constituted of a first material comprising, for example, aluminum or another appropriate material. The disc brake rotor 23, on the other hand, is preferably constituted of a second material comprising, for example, stainless steel or another appropriate material with a specific gravity greater than that of the first material of the rotor attachment boss 28

### Securing ring

The securing ring (securing member) 29, as shown in FIG. 8, is a disc-shaped member comprising a center opening 29a with a plurality of inner splines 29b. The securing ring 29, more specifically, comprises a adjoining flange 29c and a center tubular portion 29d that extends axially from the inside of the adjoining flange 29c.

The center tubular portion 29d is provided coaxially with respect to the center opening 29a. An outer thread 29e screwed onto the inner thread 34d of the brake rotor attachment portion 34 is provided on the center tubular portion 29d.

The adjoining flange 29c forms a holding face extending from the center tubular portion 29d toward the outside that is axially facing. The holding face is attached to correspond with the axially oriented holding face of the annular adjoining flange 34b of the brake rotor attachment part 34. Consequently, when the outer thread 29e of the center tubular portion 29d is screwed onto the inner thread 34d of the brake rotor attachment portion 34, the securing ring 29 can secure the disc brake rotor 23 and the rotor attachment boss 28 against the outer spline portion of the brake rotor attachment portion 34. Moreover, serrations 29f are formed on the surface of contact of the adjoining flange 29c with the disc brake rotor 23.

### The assembly of the disc brake rotor assembly

The disc brake rotor assembly 8, constituted of the components 23, 28, and 29, is attached to the front disc brake hub 12 as shown in FIG. 4.

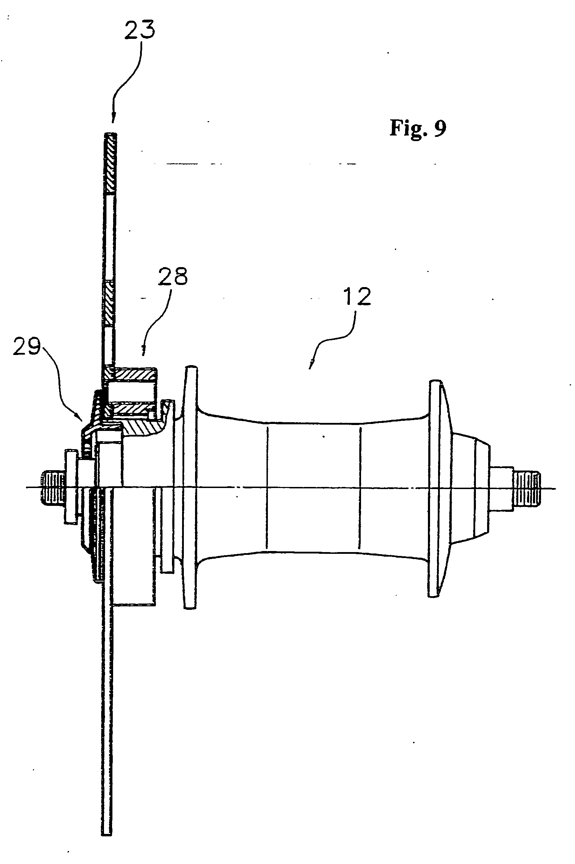

More specifically, the protrusions 28e that the rotor attachment boss 28 comprises are inserted in the openings 23g formed in the disc brake rotor 23. Moreover, the securing ring 29 is attached so as to sandwich the rotor attachment boss 28 and the disc brake rotor 23. In greater detail, the hooks 30a of the stopper 30 are inserted in the connection holes 23d formed in the disc brake rotor 23. The securing ring 29 is attached by screwing the outer thread 29e of the securing ring 29 onto the inner thread 34d formed on the break rotor attachment part 34 located on one end of the front disc brake hub 12. The disc brake rotor 23, as shown in FIG. 9, is thereby non-rotatably secured to the brake rotor attachment part 34 between the rotor attachment boss 28 and the securing ring 29.

### Features of the present disc brake rotor assembly

### (1)

The disc brake rotor assembly 8 of the present embodiment provided on the bicycle 10, as shown in FIG. 4, comprises the rotor attachment boss 28, the disc brake rotor 23, and the securing ring 29, and serrations 23h (FIG. 6) that function to stop the rotation of the securing ring 29 are formed on the surface of contact of the disc brake rotor 23 with the securing ring.

In conventional disc brake rotor assemblies, serrations were formed only on the surface of contact of the adjoining flange of the securing ring with the disc brake rotor. But in this configuration, the surface of the disc brake rotor with which the serrations formed on the securing ring make contact is nearly flat, so the anti-loosening effect cannot be termed adequate.

As such, the serrations 23h, which serve to stop the rotation of the securing ring 29, are formed on the surface that makes contact with the securing ring, that is, the surface of the disc brake rotor 23 in the disc brake rotor assembly 8 of the present embodiment.

The securing ring 29 is thus more assuredly prevented from rotating and becoming unscrewed due to long years of use, vibration, or the like.

The formation of, for example, serrations, ridges, or another rotation-inhibiting part on the surface of the adjoining flange 29c of the securing ring making contact with the disc brake rotor 23 would allow the serrations to come into contact with other serrations and provide a firmer rotation-inhibiting force.

### (2)

The disc brake rotor assembly 8 of the present embodiment provided on the bicycle 10 is non-rotatably attached to the front disc brake hub 12.

Specifically, the protrusions 28e of the rotor attachment boss 28 are inserted in the openings 28g in order to non-rotatably connect the disc brake rotor 23 to the rotor attachment boss 28 connected non-rotatably to the front disc brake hub 12.

In this manner, the disc brake rotor assembly 8 is attached non-rotatably to the front disc brake hub 12 to assuredly prevent the securing ring 29, which inhibits the rotation of the disc brake rotor assembly 8, from rotating relative to the front disc brake hub 12 with the disc brake rotor 23 and unscrewing from the front disc brake hub 12 of the securing ring 29.

### (3)

The disc brake rotor assembly 8 of the present embodiment provided on the bicycle 10 comprises a rotor attachment boss 28 and a disc brake rotor 23 as a disc brake rotor grouping.

As such, the rotor attachment boss 28 is attached non-rotatably to the front disc brake hub 12, and the disc brake rotor 23 is attached non-rotatably to the rotor attachment boss 28.

The disc brake rotor 23 can thus be non-rotatably attached to the front disc brake hub 12. Consequently, the securing ring 29 is prevented from loosening due to the rotation of the disc brake rotor 23.

### (4)

In the disc brake rotor assembly 8 of the present embodiment provided on the bicycle 10, serrations are formed not only on the surface of the disc brake rotor 23 but also on the surface of contact of the adjoining flange 29c of the securing ring 29 with the disc brake rotor 23.

The rotation-inhibiting force of the securing ring 29 is therefore greater than when serrations are formed only on the surface of contact of the disc brake rotor 23 with the securing ring 29.

### Second embodiment

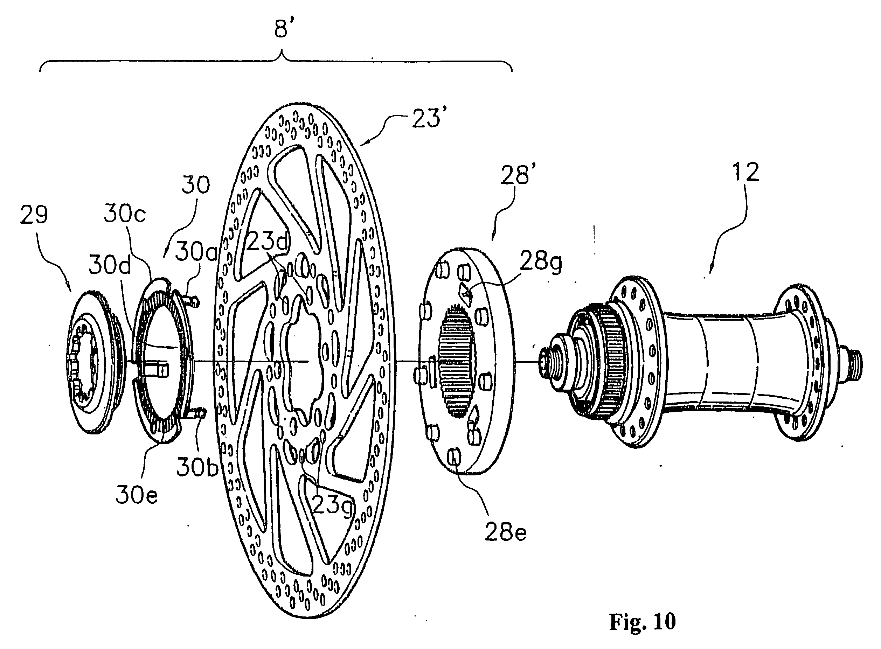

The bicycle of another embodiment of the invention is explained hereafter using FIG. 10. Parts with a function similar to the components used in the first embodiment are indicated with identical reference symbols, and a description is omitted.

The bicycle of this embodiment, as shown in FIG. 10, comprises a disc brake rotor assembly 8' attached non-rotatably to the front disc brake hub 12.

The disc brake rotor assembly 8' comprises a rotor attachment boss 28', a disc brake rotor 23', the securing ring 29, and a stopper (latching member) 30.

The rotor attachment boss 28' and the securing ring 29 function similarly to the rotor attachment boss 28 and the securing ring 29 discussed in the first embodiment.

The disc brake rotor 23', differing from the disc brake rotor 23 of the first embodiment, does not have the serrations 23h formed on the surface thereof.

Moreover, the stopper 30 is added to the disc brake rotor assembly 8 of the first embodiment. The stopper 30 is a part that can be attached with a single touch when the disc brake rotor 23' is to be connected to the rotor attachment boss 28'. In this embodiment, similar serrations are formed on the surface of contact of the stopper 30 with the securing ring 29 to correspond with the serrations formed on the securing ring 29.

### Stopper

The stopper (latching member) 30, as shown in FIG. 10, comprises three hooks (claw members) 30a inserted into the disc brake rotor 23' and the rotor attachment boss 28', a curved portion 30b formed on the tip of each hook 30a, and a ring-shaped main part 30c.

The hooks 30a extends roughly perpendicularly to the direction of attachment of the rotor attachment boss 28 from the surface constituting the ring-shaped main part 30c, and the curved portions 30b are formed at the tip portions thereof.

The curved portions 30b comprise a portion protruding in the direction that intersects with the lengthwise direction of the hooks 30a. The curved portions 30b are joined with and held by a step 28g formed inside the insertion holes 28g when the hooks 30a are inserted in the insertion hole 28g formed in the rotor attachment boss 28'.

The main part 30c, which is a disc with an opening 30d in the center, is connected to 3 of the hooks 30a positioned equidistantly on the circumference of the outer circumferential area thereof. Serrations 30e are formed on the surface of contact of the main part 30c with the securing ring 29.

### The assembly of the disc brake rotor assembly

The disc brake rotor assembly 8', constituted of the components 23', 28', 29, and 30 discussed above, is attached to the front disc brake hub 12 as shown in FIG. 10.

More specifically, the protrusions 28e formed in the rotor attachment boss 28' are inserted in the openings 23g formed in the disc brake rotor 23'. Moreover, the stopper 30 is attached so as to sandwich the disc brake rotor 23' with the rotor attachment boss 28. In greater detail, the hooks 30a of the stopper 30 are inserted in the connection holes 23d formed in the disc brake rotor 23' and inserted in the insertion holes 28g formed in the rotor attachment boss 28'.

At this time, the hooks 30a of the stopper 30 are inserted while elastically deforming, and the curved portions 30b formed on the tips thereof catch on and are held by the steps formed on the interior of the insertion holes 28g of the rotor attachment boss 28'. In the disc brake rotor assembly 8' of the present embodiment, therefore, the disc brake rotor 23' can be attached to the rotor attachment boss 28' with a single touch using the stopper 30.

Finally, the outer thread 29e of the securing ring 29 is screwed onto the inner thread 34d formed on the brake rotor attachment part 34 on one end of the front disc brake hub 12. The disc brake rotor 23' is thereby non-rotatably connected to the brake rotor attachment part 34 between the rotor attachment boss 28' and the securing ring 29.

### Features of the present disc brake rotor assembly

### (1)

In the disc brake rotor assembly 8' of the present embodiment, the stopper 30 is added to the configuration of the disc brake rotor assembly 8 of the first embodiment. Moreover, serrations 30e are formed on the stopper 30 on the surface of contact with the securing ring 29, as shown in FIG. 10.

The serrations 29f, 30e are therefore formed on the surface of mutual contact between the securing ring 29 and the stopper 30, so the serrations 29f, 30e serve as resistance against the rotation of the stopper 30 in the direction of loosening. The securing ring 29 is thereby assuredly prevented from rotating and coming unscrewed relative to the front disc brake hub 12 due to long years of use, vibration, or the like.

### (2)

In the disc brake rotor assembly 8' of the present embodiment, the stopper 30 is attached non-rotatably to the front disc brake hub 12.

With the stopper 30 attached non-rotatably to the front disc brake hub 12, the securing ring 29, which inhibits the rotation of the stopper 30, assuredly prevents the stopper 30 from rotating relative to the front disc brake hub 12 and becoming unscrewed.

### Other embodiments

The aforementioned description relates to one embodiment of the invention, but the invention, not limited to the above embodiment, may be modified in a variety of ways within a range not deviating from its essence.

### (A)

In the above embodiment, an example is discussed in which serrations are formed on the surface of contact of the adjoining flange 29c of the securing ring with the disc brake rotor 23. But the invention is not limited thereto.

The invention could also have, for example, a configuration in which serrations are not formed on the securing ring 29 and the serrations 23f, 30e are formed only on the surface of the disc brake rotor 23 (FIG. 4) or the stopper 30 (FIG. 10) with which the securing ring 29 makes contact.

### (B)

In the above embodiment, an example was discussed in which the disc brake rotor 23 and the rotor attachment boss 28 were connected to the front disc brake hub 12 as a disc brake rotor grouping. But the invention is not limited thereto.

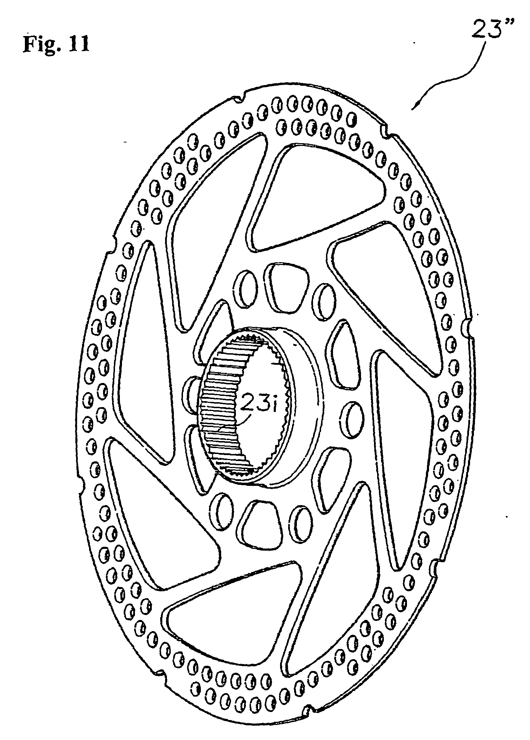

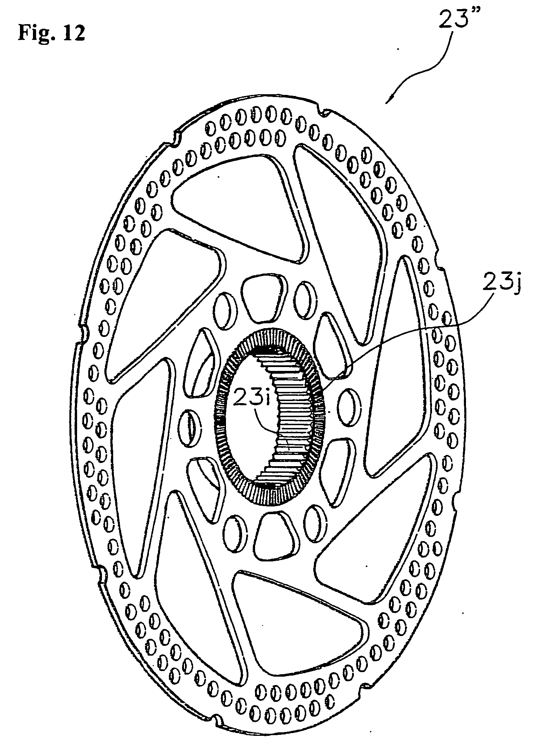

For example, as FIGS. 11 and 12 show, a disc brake rotor grouping 23" could also be formed in which the adapter is of a unitary construction with the disc brake rotor. In this case as well, as FIG. 11 shows, inner splines 23i are formed, or as FIG. 12 shows, serrations 23j are formed on the surface of contact with the securing ring 29.

### (C)

In the above embodiment, an example was discussed in which serrations are used on the disc brake rotor 23, the securing ring 29, the stopper 30, or the like as a rotation-inhibiting part for inhibiting the rotation of the securing ring 29 relative to the front disc brake hub 12. But the invention is not limited thereto.

If ridges or another rotation-inhibiting part other than serrations were formed on the disc brake rotor 23 or the like, an effect similar to that of the above embodiment would be obtained.

### (D)

In the above second embodiment, an example was discussed in which, when the stopper 30 is used, the stopper 30 is secured so as to sandwich the disc brake rotor 23' between it and the rotor attachment boss 28'. But the invention is not limited thereto.

The invention could also be configured, for example, so that the hooks 30a are inserted into the side of connection of the rotor attachment boss 28' with the front disc brake hub 12, and the bent portions 30b of the stopper 30 catch on and secure the disc brake rotor 23. As FIG. 4 shows, serrations should be formed on the surface of the disc brake rotor 23.

### (E)

In the above embodiment, the front disc brake hub 12 is given as an example of a bicycle hub connected to the disc brake rotor assembly of the invention. But the invention is not limited thereto.

Obviously, the disc brake rotor assembly 8 could also be connected to a rear bicycle hub (rear disc brake hub 12').

### Description of reference symbol

- 8: Disc brake rotor assembly
- 10: Bicycle
- 12: Front disc brake hub (bicycle hub)
- 12': Rear disc brake hub (bicycle hub)
- 23: Disc brake rotor (disc brake rotor grouping)
- 23': Disc brake rotor
- 23": Disc brake rotor grouping
- 23a: Annular movement-control ring
- 23b: Extending connection arm
- 23c: Inner attachment part
- 23d: Connection hole
- 23e: Protrusion
- 23g: Opening
- 23h: Serrations (rotation-inhibiting part)
- 23i: Inner splines
- 28: Rotor attachment boss (adapter, disc brake rotor grouping)
- 28a: Base portion
- 28b: Center opening
- 28c: Inner splines
- 28d: Outer rotor connector
- 28e: Protrusion
- 28f: Hole
- 28g: Insertion hole
- 29: Securing ring (securing member)
- 29a: Outer thread
- 29b: Inner spline
- 29c: Adjoining flange
- 29d: Center tubular portion
- 29e: Outer thread
- 29f: Serrations (rotation-inhibiting part)
- 30: Stopper (latching member)
- 30a: Hook
- 30b: Curved portion
- 30c: Main part
- 30d: Opening
- 30e: Serrations (rotation-inhibiting part)
- 32: Hub shell
- 34: Brake rotor attachment part
- 34a: Tubular part
- 34b: Annular adjoining flange
- 34c: Outer spline portion
- 34d: Inner thread

## Claims

1. A disc brake rotor assembly (8, 8') for a bicycle (10), the disc brake rotor assembly (8, 8') being non-rotatably attached to a bicycle hub (12, 12'), comprising:
a disc brake rotor grouping attached to the bicycle hub (12, 12'); and
a securing member (29) screwed on and attached to screw threads formed on the bicycle hub (12, 12') so as to sandwich the disc brake rotor grouping between it and the bicycle hub (12, 12');
**characterized in that** a rotation-inhibiting part is formed on the axial surface of contact of the disc brake rotor grouping and on the cooperating contact surface of the securing member (29).

2. The disc brake rotor assembly (8, 8') for a bicycle (10) recited in claim 1, wherein the disc brake rotor grouping is non-rotatably attached to the bicycle hub (12, 12').

3. The disc brake rotor assembly (8, 8') recited in claim 1 or 2, wherein the disc brake rotor grouping comprises a disc brake rotor (23,23') and an adapter (28, 28') connecting the disc brake rotor (23, 23') and the bicycle hub (12, 12') in a non-rotatable state.

4. A disc brake rotor assembly (8, 8') according to caims 1 to 3, wherein a latching member (30) connects and holds the disc brake rotor (23') to the adapter (28'), and wherein the securing member (29) is sandwiching the disc brake rotor grouping and the latching member (30) between it and the bicycle hub (12').

5. The disc brake rotor assembly (8, 8') for a bicycle (10) recited in claim 3, wherein the latching member (30) is non-rotatably attached to the bicycle hub (12, 12').

6. The disc brake rotor assembly (8, 8') for a bicycle (10) of any one of claims 1 to 5, wherein the rotation-inhibiting part is serrations.

## Patentansprüche

1. Scheibenbremsenrotorbaugruppe (8, 8') für ein Fahrrad (10), wobei die Scheibenbremsenrotorbaugruppe (8, 8') an der Fahrradnabe (12, 12') nicht drehbar befestigt ist, aufweisend:
eine Scheibenbremsenrotorgruppierung, die an der Fahrradnabe (12, 12') befestigt ist; und
ein Befestigungselement (29), das an einem an der Fahrradnabe (12, 12') ausgebildeten Schraubgewinde angeschraubt und befestigt ist, so dass es die Scheibenbremsenrotorgruppierung zwischen sich und der Fahrradnabe (12, 12') sandwichartig umschließt;
**dadurch gekennzeichnet, dass** ein Rotationsverhinderungsteil auf der axialen Kontaktfläche der Scheibenbremsenrotorgruppierung und an der zusammenarbeitenden Kontaktfläche des Befestigungselementes (29) ausgebildet ist.

2. Scheibenbremsenrotorbaugruppe (8, 8') für ein Fahrrad (10) nach Anspruch 1, bei der die Scheibenbremsenrotorgruppierung an der Fahrradnabe (12, 12') nicht drehbar befestigt ist;

3. Scheibenbremsenrotorbaugruppe (8, 8') nach Anspruch 1 oder 2, bei der die Scheibenbremsenrotorgruppierung einen Scheibenbremsenrotor (23, 23') und einen Adapter (28, 28') aufweist, der den Scheibenbremsenrotor (23, 23') und die Fahrradnabe (12, 12') in nichtdrehbarem Zustand verbindet.

4. Scheibenbremsenrotorbaugruppe (8, 8') nach den Ansprüchen 1 bis 3, bei der ein Einrastelement (30) den Scheibenbremsenrotor (23') mit dem Adapter (28') verbindet und diesen festhält, und wobei das Befestigungselement (29) die Scheibenbremsenrotorgruppierung und das Einrastelement (30) zwischen sich und der Fahrradnabe (12') sandwichartig umschließt.

5. Scheibenbremsenrotorbaugruppe (8, 8') für ein Fahrrad (10) nach Anspruch 3, bei der das Einrastelement (30) an der Fahrradnabe (12, 12') nicht-drehbar befestigt ist.

6. Scheibenbremsenrotorbaugruppe (8, 8') für ein Fahrrad (10) nach einem der Ansprüche 1 bis 5, bei dem es sich beim Rotationsverhinderungsteil um Verzahnungen handelt.

## Revendications

1. Ensemble de rotor de frein à disque (8, 8') pour une bicyclette (10), l'ensemble de rotor de frein à disque (8, 8') étant fixé de manière non rotative à un moyeu (12, 12') de bicyclette, comprenant :
un groupe formant rotor de frein à disque fixé au moyeu (12, 12') de bicyclette ; et
un élément de fixation (29) vissé et fixé sur des filetages de vis formés sur le moyeu (12, 12') de bicyclette afin de prendre en sandwich le groupe formant rotor de frein à disque entre celui-ci et le moyeu (12, 12') de bicyclette ;
**caractérisé en ce qu'**une partie antirotation est formée sur la surface axiale de contact du groupe formant rotor de frein à disque et sur la surface de contact coopérante de l'élément de fixation (29).

2. Ensemble de rotor de frein à disque (8, 8') pour une bicyclette (10) selon la revendication 1, dans lequel le groupe formant rotor de frein à disque est fixé de manière non rotative sur le moyeu (12, 12') de bicyclette.

3. Ensemble de rotor de frein à disque (8, 8') selon la revendication 1 ou 2, dans lequel le groupe formant rotor de frein à disque comprend un rotor de frein à disque (23, 23') et un adaptateur (28, 28') raccordant le rotor de frein à disque (23, 23') et le moyeu (12, 12') de bicyclette dans un état non rotatif.

4. Ensemble de rotor de frein à disque (8, 8') selon les revendications 1 à 3, dans lequel un élément de verrouillage (30) raccorde et maintient le rotor de frein à disque (23') à l'adaptateur (28') et dans lequel l'élément de fixation (29) prend en sandwich le groupe formant rotor de frein à disque et l'élément de verrouillage (30) entre celui-ci et le moyeu (12') de bicyclette.

5. Ensemble de rotor de frein à disque (8, 8') pour une bicyclette (10) selon la revendication 3, dans lequel l'élément de verrouillage (30) est fixé de manière non rotative au moyeu (12, 12') de bicyclette.

6. Ensemble de rotor de frein à disque (8, 8') pour une bicyclette (10) selon l'une quelconque des revendications 1 à 5, dans lequel la partie antirotation est des dentelures.
